# EUROPÄISCHE PATENTSCHRIFT

(11) **EP 0 743 339 B1**
(45) Veröffentlichungstag und Bekanntmachung des Hinweises auf die Patenterteilung: **16.06.1999**
(21) Anmeldenummer: 96810294.7
(22) Anmeldetag: 06.05.1996
(51) Int. Cl.: C08K 13/02, C08L 27/24

(54) **Stabilisiertes CPVC (chloriertes PVC)**
Stabilised CPVC (chlorinated PVC)
CPVC (PVC chloré) stabilisé

(30) Priorität: 17.05.1995 CH 145895
(43) Veröffentlichungstag der Anmeldung: 20.11.1996
(73) Patentinhaber: Witco Vinyl Additives GmbH, 68623 Lampertheim (DE)
(72) Erfinder: Kaufhold, Johannes, 64678 Lindenfels (DE); Sander, Hans-Jürgen, 64653 Lorsch (DE)

(56) Entgegenhaltungen:
- EP-A- 0 658 594
- GB-A- 1 229 521
- GB-A- 1 229 522
- GB-A- 1 392 092
- US-A- 5 030 676
- DATABASE WPI Section Ch, Week 8434 Derwent Publications Ltd., London, GB; Class A14, AN 84-209543 XP002010735 & JP-A-59 120 646 (ADEKA-ARGUS CHEM KK) , 12.Juli 1984

## Beschreibung

Die Erfindung betrifft Zusammensetzungen enthaltend chloriertes PVC und eine Stabilisatorkombination aus Organozinnstabilisator und Alkali- oder Erdalkalimetalloxid bzw. -hydroxid sowie die Stabilisatorkombination selbst und deren Verwendung.

Organozinnverbindungen sind seit längerem als Stabilisatoren für PVC bekannt (s. z.B. US 4,743,640, Spalten 4 bis 6 und US 4,839,409, Spalten 4 bis 9) und werden z.B. auch bei der Spritzgußverarbeitung von chloriertem Polyvinylchlorid (CPVC) eingesetzt (G.T. Dalal, J. Vinyl. Techn. 7, 36 (1985); US 4,347,205; WO 90 03 999; US 4,331,775; US 4,345,040). Bei diesem Verfahren kann das Material auf zweierlei Weise belastet werden: Zum einen durch Scherkräfte (frikativ) und zum anderen durch hohe Temperaturen. In beiden Fällen steigt die Beanspruchung bei längeren Verweilzeiten im Verarbeitungsgerät. Für derartige Bedingungen sucht man weiterhin nach wirksamen Stabilisatorkombinationen, welche einen größtmöglichen Schutz gegen den Abbau durch thermische und frikative Belastungen bieten.

US-A-5 030 676 beschreibt PVC-Zusammensetzungen für Aussenanwendungen enhaltend Organozinnverbindungen und Magnesiumoxid.

JP-A-59 120 646 offenbart CPVC-Zusammensetzungen enhaltend Organozinnmercaptide, Aluminiumverbindungen und Magnesiumhydroxid, z. B. in Form von Hydrotalcit, für beispielsweise wetterfeste Anwendungen.

GB-A-1 229 521, GB-A-1 229 522 und GB-A-1 392 092 beschreiben Stabilisatorkombinationen für PVC, bestehend z. B. aus Dibutylzinn(isooctylthioglycolat) und Magnesiumoxid, Bariumoxid oder Calciumoxid.

Überraschenderweise bewirkt die Kombination von Organozinnstabilisatoren mit bestimmten Oxiden oder Hydroxiden von Alkali- oder Erdalkalimetallen eine deutliche Verbesserung der thermischen und mechanischen Belastbarkeit bei der Verarbeitung von CPVC.

Die Erfindung betrifft somit eine Zusammensetzung enthaltend chloriertes PVC (CPVC) und als Stabilisatorkombination
A) mindestens eine Organozinnverbindung einer der Formeln I bis VII

   [R¹]ᵢSn[-Q-R²]₄₋ᵢ (I)

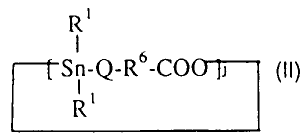

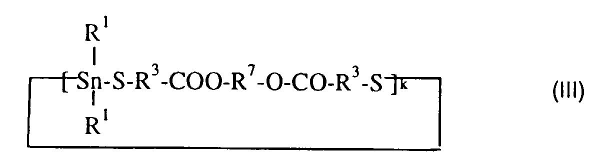

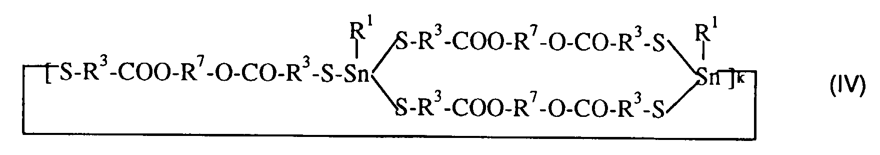

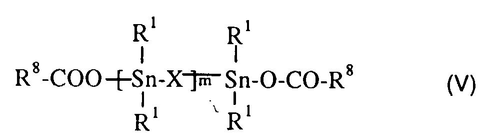

   RₚSnS_{q} (VI) oder [RₚSnS_{q}]ᵣ (VII)

   worin
   R und R¹ unabhängig voneinander C₁-C₁₂-Alkyl oder C₃-C₁₁-Alkoxycarbonylethyl bedeuten,
   Q die Bedeutung von -S- oder -O-CO- hat und,
   R², wenn Q für -S- steht, C₈-C₁₈-Alkyl oder ein Rest -R³-COO-R⁴ oder -R³-O-CO-R⁴ ist,
   R², wenn Q für -O-CO- steht, C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
   R³ Methylen, Ethylen oder o-Phenylen,
   R⁴ C₅-C₁₈-Alkyl,
   R⁵ C₁-C₁₈-Alkyl, C₅-C₇-Cycloalkyl oder Benzyl bedeuten,
   R⁶, wenn Q für -S- steht, Methylen, Ethylen oder o-Phenylen,
   R⁶, wenn Q für -O-CO- steht, C₁-C₈-Alkylen, o-Phenylen oder eine Gruppe -CH=CH-bedeutet,
   R⁷ C₂-C₄-Alkylen oder durch -O- unterbrochenes C₄-C₈-Alkylen darstellt,
   R⁸ C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
   X unabhängig voneinander die Bedeutung -O- oder -O-CO-R⁹-COO- hat,
   R⁹ C₁-C₈-Alkylen, o-Phenylen oder eine Gruppe -CH=CH- bedeutet,
   p 1 oder 2, q (4-p)/2, und r > 1 sind,
   i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen, sowie
B) mindestens eine Verbindung ausgewählt aus NaOH, kOH, Ca(OH)₂ und CaO.

R, R¹, R², R⁴, R⁵ und R⁸ als Alkyl sind im Rahmen der angegebenen Definitionen z.B. Methyl, Ethyl, Propyl, Isopropyl, Butyl, Isobutyl, tert-Butyl, Pentyl, Hexyl, Heptyl, Octyl, Isooctyl, 2-Ethylhexyl, Nonyl, Decyl, Undecyl, Dodecyl, Tridecyl, Tetradecyl, Pentadecyl, Hexadecyl, Heptadecyl oder Octadecyl.

Isooctyl bedeutet die Alkylreste des aus dem Oxoprozess stammenden Gemisches von primären verzweigten Alkoholen R'CH₂OH, wobei R' eine verzweigte Heptylgruppe ist (Merck Index 10th.ed., 5041).

R als Alkyl bedeutet bevorzugt n- und iso-Alkylreste, besonders bevorzugt Methyl, Ethyl und n-Butyl.

R¹ hat als Alkyl bevorzugt die Bedeutung von Methyl, Butyl oder Octyl.

R und R¹ als C₃-C₁₁-Alkoxycarbonylethyl bedeuten C₁-C₈-Alkyl-O-CO-CH₂-CH₂-.

R² und R⁸ als C₂-C₁₈-Alkenyl bedeuten z.B. Ethenyl (Vinyl), Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Heptadec-8-enyl, n-Octadec-2-enyl, n-Octadec-4-enyl.

Die Bedeutung von R² und R⁸ als mit C₁-C₄-Alkyl substituiertes Phenyl umfaßt beispielsweise Methylphenyl, Dimethylphenyl, Trimethylphenyl, Ethylphenyl, Diethylphenyl, Isopropylphenyl oder tert-Butylphenyl.

R², R⁶, R⁸ und R⁹ als -CH=CH-COO-R⁵ beziehungsweise -CH=CH- leiten sich von Maleinsäure oder Fumarsäure ab, vorzugsweise von Maleinsäure.

R⁵ als C₅-C₇-Cycloalkyl ist Cyclopentyl, Cyclohexyl oder Cycloheptyl, vorzugsweise Cyclopentyl oder Cyclohexyl, vor allem Cyclohexyl.

R⁶ und R⁷ als Alkylen bedeuten einen zweiwertigen Alkylrest; im Rahmen der angegebenen Kettenlängen sind R⁶ und R⁷ z.B. Methylen, Ethylen, -CH(CH₃)-CH₂-, -(CH₂)₃-, -(CH₂)₄-, -(CH₂)₆-, -(CH₂)₈-, -CH₂-CH(C₂H₅)-(CH₂)₄-, -CH₂-C(CH₃)₂-CH₂-; bevorzugt sind geradkettige Reste.

R⁷ bedeutet als durch -O- unterbrochenes C₄-C₈-Alkylen beispielsweise -(CH₂)₂-O-(CH₂)₂-, -(CH₂)₃-O-(CH₂)₃, -(CH₂)₂-O-(CH₂)₄- oder -(CH₂)₄-O-(CH₂)₄-, insbesondere -(CH₂)₂-O-(CH₂)₂-. Die Einheit (O-CH₂-CH₂) kann auch mehrfach vorhanden sein. Beispiele für solche Reste sind (CH₂)₂-(O-CH₂CH₂-)₂- und -(CH₂)₂-(O-CH₂CH₂-)₃.

Der Index r ist nach oben offen, weil es sich bei den Sulfiden um amorphe, koordinativ vernetzte Gitterstrukturen handeln kann. Man kann auch wie in Formel VI auf die Darstellung dieses Sachverhalts verzichten. Formeln VI und VII sind somit im wesentlichen austauschbar. Beispielhafte Strukturen der Sulfide finden sich weiter unten unter "Typische Sulfide".

Chloriertes PVC (post-chlorinated polyvinyl chloride), CPVC, erhält man durch nachträgliches Chlorieren aus PVC. Der Chlorgehalt liegt nach der Chlorierung über dem für PVC üblichen von ca. 57%; er kann bis 74% betragen und liegt gewöhnlich bei 63 bis 69% [Siehe dazu G.T. Dalal, J. Vinyl. Techn. 7, 36 (1985)].

Das PVC kann auf verschiedene Weise nachchloriert werden, beispielsweise in Suspension unter UV Licht (US 4,345,040; US 2,996 489;US 3,100 762). Man setzt das PVC dabei bevorzugt in grob granulierter Form ein, und es kann sich um hoch- oder niedermolekulares PVC handeln, wobei hochmolekulares bevorzugt eingesetzt wird.

Das CPVC wird beispielsweise verwendet für Rohre, Leitungen, Behälter, Werkstücke, Armaturen, elektrische Komponenten, Automobilteile und weitere starre Artikel. Besonders geeignet ist es für Anwendungen, bei denen höhere Drücke und Temperaturen gleichzeitig herrschen. Anwendungsgebiete sind z.B. Anlagenbau, Heißwassersysteme, Filteranlagen und Dachrinnen.

Bevorzugt als Komponente B) sind CaO und Ca(OH)₂.

Die Organozinnverbindungen der Formeln I bis VII sind bekannt (Siehe z.B. die eingangs genannten Literaturstellen sowie US 5,021,491 und die dort referierten: US 2,731,482, US 2,731,484, US 2,713,585, US 2,648,650, US 3,507,827). Insbesondere kann es sich um Carboxylate, Mercaptide und Sulfide handeln.

Typische Mercaptide sind: Methylzinntris(alkylthioglykolat) oder -tris(alkylthiopropionat), n-Butylzinn-tris(alkylthioglykolat), n-Butoxycarbonylethylzinn-tris(alkylthioglykolat), Dimethylzinn-bis(alkylthioglykolat) oder -bis(alkylthiopropionat); Di-n-butylzinn-bis(alkylthioglykolat) oder -(alkylthiopropionat); Bis-(n-butoxycarbonylethyl)zinn-tris(alkylthioglykolat) sowie n-Octylzinn-tris(isooctylthioglykolat).

Typische Sulfide sind solche der Formeln VI und VII, z.B.

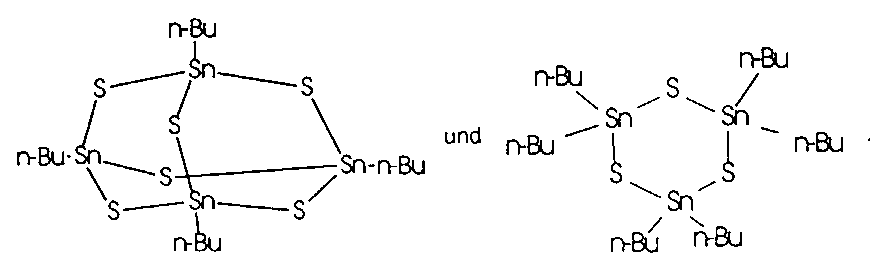

Typische Carboxylate sind Di-n-butylzinn-bis(methylmaleat), Di-n-butylzinn-bis(butylmaleat) und polymeres Di-n-butylzinnmaleat.

Bevorzugt bedeuten in den Verbindungen der Formeln I bis IV:
R¹ C₁-C₁₂-Alkyl,
R², wenn Q für -S- steht, C₈-C₁₈-Alkyl oder einen Rest -R³-COO-R⁴,
R², wenn Q für -O-CO- steht, C₇-C₁₈-Alkyl, C₈-C₁₈-Alkenyl, Phenyl, oder einen Rest -CH=CH-COO-R⁵,
R³ Methylen, Ethylen oder o-Phenylen,
R⁴ C₅-C₁₈-Alkyl,
R⁵ C₁-C₁₈-Alkyl oder C₅-C₇-Cycloalkyl,
R⁶ , wenn Q für -S- steht, Methylen, Ethylen oder o-Phenylen,
R⁶ , wenn Q für -O-CO- steht, C₁-C₄-Alkylen, o-Phenylen oder eine Gruppe -CH=CH-,
R⁷ C₂-C₄-Alkylen oder durch -O- unterbrochenes C₄-C₈-Alkylen,
i die Zahl 1 oder 2, j eine Zahl aus dem Bereich von 1 bis 6 und k eine Zahl aus dem Bereich von 1 bis 3.

Besonders bevorzugt bedeuten in den Verbindungen der Formeln I bis IV:
R¹ C₃-C₉-Alkyl,
R², wenn Q für -S- steht, einen Rest -R³-COO-R⁴,
R², wenn Q für -O-CO- steht, C₇-C₁₁-Alkyl oder einen Rest -CH=CH-COO-R⁵,
R³ Methylen oder Ethylen,
R⁴ C₈-C₁₂-Alkyl,
R⁵ C₁-C₁₈-Alkyl oder Cyclohexyl,
R⁶, wenn Q für -S- steht, Methylen oder Ethylen,
R⁶, wenn Q für -O-CO- steht, eine Gruppe -CH=CH-,
R⁷ -C₂H₄- sowie i die Zahl 1 oder 2, j eine Zahl aus dem Bereich von 1 bis 6 und k eine Zahl aus dem Bereich von 1 bis 3.

Die Substituenten an den genannten Gruppierungen -CH=CH- sind besonders bevorzugt cis-ständig (Z-konfiguriert) und leiten sich in den Verbindungen von der Maleinsäure ab.

Ganz besonders bevorzugt sind Zusammensetzungen, welche als Verbindung(en) der Komponente A) solche der Formel I und/oder III enthalten, worin R¹ Butyl oder Octyl, R³ -CH₂-, R⁷ -C₂H₄- und im Fall Q = S, R² für -CH₂-COO-R⁴ steht, R⁴ C₈-C₁₂-Alkyl ist, sowie im Fall Q = O-CO R², für -CH=CH-COO-R⁵ und R⁵ für C₁-C₁₈-Alkyl stehen.

Die Komponente A) ist im CPVC vorzugsweise zu 0,5 bis 5, insbesondere zu 1,5 bis 2,5 Gew.% enthalten, die Komponente B) bevorzugt zu 0,1 bis 4, insbesondere zu 0,5 bis 1,5 Gew.%.

Die erfindungsgemäßen Zusammensetzungen enthalten als Komponente A) vorzugsweise ein Gemisch von Verbindungen. Zusammensetzungen, welche als Komponente A) nur eine Verbindung enthalten, sind jedoch auch Gegenstand der Erfindung und weisen die gleichen vorteilhaften Eigenschaften auf.

Aus der Chemie der Organozinnstabilisatoren weiß man, daß diese im stabilisierten Substrat oft nicht mehr in derselben Form vorliegen, wie sie zugegeben wurden. Es entstehen gewöhnlich Reaktions-(Komproportionierungs-)produkte. Die Erfindung umfaßt selbstverständlich auch Zusammensetzungen, die solche aus den Verbindungen der Komponente A) entstandenen Produkte enthalten.

Zusammen mit den Verbindungen der Komponente A) der Formeln I bis VII können in den erfindungsgemäßen Zusammensetzungen auch noch weitere Zinnstabilisatoren enthalten sein, sofern sie die durch die genannten Verbindungen erzielten verbesserten Eigenschaften nicht nachteilig beeinflussen. Bevorzugt sind jedoch diejenigen erfindungsgemäßen Zusammensetzungen, welche neben den oben beschriebenen Organozinnverbindungen der Komponente A) und deren Komproportionierungsprodukten keine weiteren Zinnstabilisatoren enthalten.

Ein weiterer Gegenstand der Erfindung ist die Verwendung der Organozinnverbindungen der Komponente A) in Kombination mit den oben als Komponente B) definierten Oxiden bzw. Hydroxiden zum Stabilisieren von CPVC. Dabei werden beispielsweise zu 100 Gewichtsteilen CPVC 0,5-5Gewichtsteile mindestens einer der oben als Komponente A) definierten Organozinnverbindungen in Kombination mit 0,1-4,0 Gewichtsteilen (auf 100 Gewichtsteile CPVC) mindestens einer der oben als Komponente B) definierten Oxide bzw. Hydroxide von bestimmten Erdalkali- oder Alkalimetallen gegeben. Insofern betrifft die Erfindung auch ein Verfahren zum Stabilisieren von CPVC durch Zugabe der anfangs definierten Komponenten A) und B).

Das erfindungsgemäß stabilisierte CPVC eignet sich vornehmlich für die Spritzgußverarbeitung. Die Vorteile kommen bei dieser Art der Verarbeitung besonders gut zur Geltung. Insbesondere erzielt man eine überraschend gute Stabilisierung bei hoher Belastung durch Scherkräfte. Das ermöglicht eine unproblematische Verarbeitung im Spritzgußverfahren.

Zusätzlich zu der erfindungsgemäßen Stabilisatorkombination kann das CPVC noch weitere übliche Stabilisatoren enthalten.

Beispielhaft sind zu nennen: Antioxidantien, Perchlorate, Füllstoffe und Verstärkungsmittel, Metallseifen, beta-Diketone (1,3-Diketoverbindungen), Zeolithe, Hydrotalcite, organische Phosphite, UV-Absorber und Lichtschutzmittel, Gleitmittel, Dihydropyridine, sterisch gehinderte Amine (HALS), Gleitmittel, Fettsäureester, Paraffine, Treibmittel, optische Aufheller, Pigmente, Flammschutzmittel, Antistatika, b-Aminocrotonate (wie z.B. in EP 0 465 405, S.6, Z. 9-14, erwähnt), Pyrrole (s. ebenda), Naphthole, Hydroxydiphenylamine, Phenylindole, Phosphate, Thiophosphate, Gelierhilfen, Modifikatoren (z.B. Schlagzähigkeits-Verbesserer, sog. *impact modifier)*, weitere Metallstabilisatoren und Komplexbildner für Lewis-Säuren.

Dem Fachmann ist bekannt, welche Stoffe zu den genannten Gruppen gehören. Beispielhaft seien davon einige genannt:

Perchlorate (bzw. Perchlorsäure) entsprechen der Formel M(ClO₄)ₙ, wobei M⁺ für H⁺, NH₄⁺, Na⁺, K⁺, Mg²⁺, Ca²⁺, Ba²⁺ oder Al³⁺ steht. Der Index n ist entsprechend der Wertigkeit von M 1, 2 oder 3.

Die Perchlorsäure oder das jeweilige Perchlorat können dabei in verschiedenen gängigen Darreichungsformen eingesetzt werden; z.B als Salz oder wäßrige Lösung aufgezogen auf ein Trägermaterial wie PVC, Ca-Silikat, Zeolithe oder Hydrotalcite, oder eingebunden durch chemische Reaktion in einen Hydrotalcit. Sie können in einer Menge von beispielsweise 0,001 bis 5, zweckmäßig 0,01 bis 3, besonders bevorzugt 0,01 bis 2,0 Gew.-Teilen, bezogen auf 100 Gew.-Teile CPVC, angewandt werden.

Als Füllstoffe werden z.B. Kreide, Kaolin, China-Clay, Talk, Silikate, Glasfasem, Glaskugeln, Holzmehl, Glimmer, Ruß, Graphit, Gesteinsmehl oder Schwerspat verwendet. Bevorzugt sind Talk und Kreide.

Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile CPVC, eingesetzt werden.

Metallseifen sind in der Hauptsache Metallcarboxylate bevorzugt längerkettiger Carbonsäuren. Geläufige Beispiele sind Stearate und Laurate, auch Oleate und Salze kürzerkettiger Alkylcarbonsäuren. Oft verwendet man sog. synergistische Mischungen wie Barium/Zink-, Magnesium/Zink- , Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5th Ed. Vol. A16 (1985) S.361 ff.

Als weitere Metallstabilisatoren sind Antimonstabilisatoren, z.B. der Formel Sb(SCH₂COO-i-octyl) zu nennen (vgl. US 4,743,640).

Verwendbare β-Diketone bzw. 1,3-Dicarbonylverbindungen können lineare oder cyclische Dicarbonylverbindungen sein. Gebräuchliche Beispiele sind in "Plastics Additives", Herausgeber R. Gächter und H. Müller, Hanser Verlag, 3.Auflage, 1990, S. 306 ff genannt. Beispiele für 1,3-Dicarbonylverbindungen sind Acetylaceton, Butanoylaceton, Heptanoylaceton, Stearoylaceton, Palmitoylaceton, Lauroylaceton, 7-tert-Nonylthio-heptandion-2,4, Benzoylaceton, Dibenzoylmethan, Lauroylbenzoylmethan, Palmitoyl-benzoylmethan, Stearoylbenzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester, Stearoylessigsäure-ethyl-, -propyl-, -butyl-, -hexyl- oder -octylester und Dehydracetsäure sowie deren Zink-, Calcium- oder Magnesiumsalze.

Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile CPVC, angewandt werden.

Als Antioxidantien kommen in erster Linie solche in Betracht, die eine sterisch gehinderte Phenolgruppe enthalten. Bekanntestes Beispiel ist das 2,6-Di-tert-butyl-4-methylphenol (BHT). Erwähnenswert sind auch die Ester der b-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, Di-trimethylolpropan, 4-Hydroxymethyl-1-phospha-2,6,7-trioxabicyclo-[2.2.2]-octan.

Die Antioxidantien können in einer Menge von beispielsweise 0,01 bis 10, zweckmäßig 0,1 bis 10 und insbesondere 0,1 bis 5 Gew.-Teilen, bezogen auf 100 Gew.-Teile CPVC, angewandt werden.

Als UV-Absorber und Lichtschutzmittel kommen in erster Linie Benzophenon- und Benzotriazolderivate in Betracht: Bekannte Produkte finden sich in "Plastics Additives", Herausgeber R. Gächter und H. Müller, Hanser Verlag, 3.Auflage, 1990, S. 205 ff.

Als Gleitmittel kommen beispielsweise in Betracht: Montanwachs, Fettsäureester, Komplexester, PE-Wachse, Amidwachse, Chlorparaffine, Glycerinester oder Erdalkaliseifen. Verwendbare Gleitmittel sind auch in "Plastics Additives", Herausgeber R. Gächter und H. Müller, Hanser Verlag, 3.Auflage, 1990, Kap. 6, Seiten 423-480 sowie in "Kunststoff Handbuch PVC" 2/1, 20. Aufl. 1986, S. 570-595, beschrieben.

Es kommen organische Phosphite der allgemeinen Formel P(OR')₃ in Betracht, wobei die Reste R' gleiche oder verschiedene Alkyl-, Alkenyl-, Aryl- oder Aralkyl-Reste bedeuten. Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert-butylphenyl)-di-dodecylphosphit, (2,6-Di-tert-butylphenyl)-di- dodecylphosphit und die Dialkyl- und Diaryl-pentaerythrit-diphosphite, wie Distearylpentaerythrit-diphosphit, sowie nichtstöchiometrische Triarylphosphite. z.B. der Zusammensetzung (H₁₉C₉-C₆H₄)O_{1,5}P(OC_{12/13}H_{25/27})_{1,5}. Bevorzugte organische Phosphite sind Distearyl-pentaerythrit-diphosphit, Trisnonylphenylphosphit und Phenyl-didecyl-phosphit.

Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile CPVC, angewandt werden.

Als Verbindungen aus der Reihe der Hydrotalcite oder Zeolithe_kommen sowohl die natürlich vorkommenden Mineralien als auch synthetisch hergestellte Verbindungen in Betracht. Die zusätzliche Verwendung von Hydrotalciten oder/und Zeolithen in den erfindungsgemäßen Zusammensetzungen ist bevorzugt, da diese Verbindungen die Stabilisierung synergistisch verstärken können.

Die chemische Zusammensetzung der Hydrotalcite und Zeolithe ist dem Fachmann bekannt.

Beispiele für Hydrotalcite sind

Al₂O₃.6MgO.CO₂.12H₂O,

Mg_{4,5}Al₂(OH)₁₃.CO₃.3,5H₂O,

4MgO.Al₂O₃.CO₂.9H₂O,

4MgO.Al₂O₃.CO₂.6H₂O,

ZnO.3MgO.Al₂O₃.CO₂.8-9H₂O

oder

ZnO.3MgO.Al₂O₃.CO₂.5-6H₂O.

Beispiele für Zeolithe sind Natriumalumosilikate der Formeln

Na₁₂Al₁₂Si₁₂O₄₈. 27 H₂O [Zeolith A],

Na₆Al₆Si₆O₂₄ . 2 NaX . 7,5 H₂O, X= OH, Halogen, ClO₄ [Sodalith]

Na₆Al₆Si₃₀O₇₂ . 24 H₂O,

Na₈Al₈Si₄₀O₉₆ . 24 H₂O,

Na₁₆Al₁₆Si₂₄O₈₀ . 16 H₂O,

Na₁₆Al₁₆Si₃₂O₉₆ . 16 H₂O,

Na₅₆Al₅₆Si₁₃₆O₃₈₄ . 250 H₂O, [Zeolith Y]

Na₈₆Al₈₆Si₁₀₆O₃₈₄ . 264 H₂O [Zeolith X]

oder die durch teilweisen bzw. vollständigen Austausch der Na-Atome durch Li-, K-, Mg-, Ca-, Sr- oder Zn-Atome darstellbaren Zeolithe wie

(Na,K)₁₀Al₁₀Si₂₂O₆₄ . 20 H₂O,

Ca_{4,5}Na₃[(AlO₂)₁₂(SiO₂)₁₂] . 30 H₂O

oder

K₉Na₃[(AlO₂)₁₂(SiO₂)₁₂] . 27 H₂O.

Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile CPVC, angewandt werden.

Die Herstellung der erfindungsgemäßen Zusammensetzungen erfolgt nach bekannten Verfahren. Die Stabilisatoren werden dem CPVC vor der Verarbeitung in bekannter Weise zugemischt. Eine homogene Mischung kann z.B. vor der Verarbeitung mit Hilfe eines Heiz-Kühl-Mischers bei üblicherweise bis 120°C in der Heizphase erhalten werden.

Die folgenden Beispiele erläutern die Erfindung weiter, ohne sie zu beschränken. Teile und Prozente beziehen sich, wie auch in der übrigen Beschreibung, auf das Gewicht, sofern nicht anders angegeben.

### Beispiel:

57 g des CPVC-Compounds (Zusammensetzung gemäß Tabelle I) werden in der Knetkammer eines Brabender Plasticorders bei 35 UpM und 190°C thermisch und frikativ, d.h. durch Scherkräfte, belastet. Im Abstand von jeweils 5 min werden aus der plastifizierten CPVC-Masse Proben entnommen, welche anschließend bei 180°C innerhalb von 1,5 min zu Prüfkörpern verpreßt werden. Von diesen Mustern wird durch farbmetrische Bestimmung der Yellowness Index (Yl; DIN 5033, ASTM 1925-70) ermittelt. Geringe Yellowness Indices bedeuten gute Wirkung des Stabilisators. Darüber hinaus erfolgt die Charakterisierung der Langzeit-Thermostabilität anhand der Zeitdauer bis zum Anstieg des Drehmoments durch Vernetzung des Polymermaterials (Brabender-Zersetzungszeit). Lange Zersetzungszeiten bedeuten demnach gute Stabilisierung. Die Ergebnisse sind in der folgenden Tabelle I zusammengestellt. Es zeigt sich, daß die Stabilisierung mit der Organozinnverbindung und CaO derjenigen mit der Organozinnverbindung allein überlegen ist.

**Tabelle I**

| Brabender-Hitzetest bei 190°C | | |
|---|---|---|
| Mischung | 1 | 2 |
| CPVC | 100 | 100 |
| Acrylat-Impact-Modifier | 3 | 3 |
| PMMA-Fließhilfe | 1,5 | 1,5 |
| Teilox. PE-Wachs | 0,6 | 0,6 |
| Fettsäureester | 0,6 | 0,6 |
| TiO₂ | 0,5 | 0,5 |
| Ca-Stearat | 0,5 | 0,5 |
| Organo-Sn-Mercaptid¹⁾ | 0,8 | 0,8 |
| Calciumoxid | ---- | 1,0 |
| | | |
| Brabender-Zersetzungszeit [Minuten] | 42 | 56 |
| | | |
| YI nach 15 Min. | 20,7 | 20,7 |
| YI nach 20 Min. | 26,1 | 23,6 |
| YI nach 25 Min. | 31,0 | 28,2 |
| YI nach 30 Min. | 38,5 | 35,1 |
| YI nach 35 Min. | 53,4 | 42,4 |

| | | |
|---|---|---|
| ¹⁾Gemisch aus 70 Gew.-Teilen (C₄H₉)₂Sn[SCH₂COO-CH₂CH(C₂H₅)C₄H₉]₂ und 30 Gew.-Teilen C₄H₉Sn[SCH₂COO-CH₂CH(C₂H₅)C₄H₉]₃ | | |

## Patentansprüche

1. Zusammensetzung enthaltend chloriertes PVC (CPVC) und als Stabilisatorkombination
A) mindestens eine Organozinnverbindung einer der Formelnl bis VII
[R¹]ᵢSn[-Q-R²]₄₋ᵢ (I) 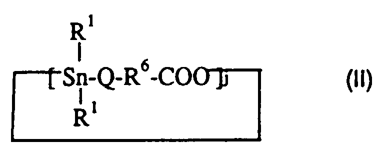 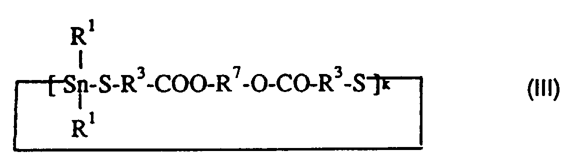 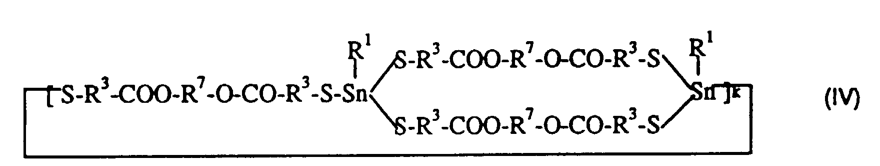 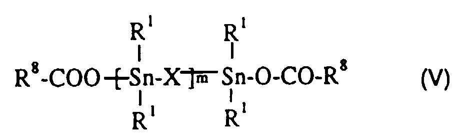
RₚSnS_{q} (VI) oder [RₚSnS_{q}]ᵣ (VII)
worin
R und R¹ unabhängig voneinander C₁-C₁₂-Alkyl oder C₃-C₁₁-Alkoxycarbonylethyl bedeuten,
Q die Bedeutung von -S- oder -O-CO- hat und,
R², wenn Q für -S- steht, C₈-C₁₈-Alkyl oder ein Rest -R³-COO-R⁴ oder -R³-O-OO-R⁴ ist,
R², wenn Q für -O-CO- steht, C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl, C₅-C₇-Cycloalkyl oder Benzyl bedeuten,
R⁶, wenn Q für -S- steht, Methylen, Ethylen oder o-Phenylen,
R⁶, wenn Q für -O-CO- steht, C₁-C₈-Alkylen, o-Phenylen oder eine Gruppe -CH=CH- bedeutet,
R⁷ C₂-C₄-Alkylen oder durch -O- unterbrochenes C₄-C₈-Alkylen darstellt,
R⁸ C₁-C₁₈-Alkyl, C₂-C₁₈-Alkenyl, Phenyl, durch C₁-C₄-Alkyl substituiertes Phenyl, oder ein Rest -CH=CH-COO-R⁵ ist,
X unabhängig voneinander die Bedeutung -O- oder -O-CO-R⁹-COO- hat,
R⁹ C₁-C₈-Alkylen, o-Phenylen oder eine Gruppe -CH=CH- bedeutet,
p 1 oder 2, q (4-p)/2, und r > 1 sind,
i die Zahl 1 oder 2, j eine Zahl aus dem Bereich von 1 bis 6, k eine Zahl aus dem Bereich von 1 bis 3 und m eine Zahl aus dem Bereich von 1 bis 4 darstellen, sowie
B) mindestens eine Verbindung ausgewählt aus NaOH, kOH, Ca(OH)₂ und CaO.

2. Zusammensetzung gemäß Anspruch 1, worin in den Verbindungen der Formeln I bis IV,
R¹ C₁-C₁₂-Alkyl bedeutet,
R², wenn Q für -S- steht, C₈-C₁₈-Alkyl oder ein Rest -R³-COO-R⁴ ist,
R², wenn Q für -O-CO- steht, C₇-C₁₈-Alkyl, C₈-C₁₈-Alkenyl, Phenyl, oder ein Rest -CH=CH-COO-R⁵ ist,
R³ Methylen, Ethylen oder o-Phenylen,
R⁴ C₅-C₁₈-Alkyl,
R⁵ C₁-C₁₈-Alkyl oder C₅-C₇-Cycloalkyl bedeuten,
R⁶, wenn Q für -S- steht, Methylen, Ethylen oder o-Phenylen,
R⁶, wenn Q für -O-CO- steht, C₁-C₄-Alkylen, o-Phenylen oder eine Gruppe -CH=CH- bedeutet,
R⁷ C₂-C₄-Alkylen oder durch -O- unterbrochenes C₄-C₈-Alkylen darstellt,
und i die Zahl 1 oder 2, j eine Zahl aus dem Bereich von 1 bis 6 und k eine Zahl aus dem Bereich von 1 bis 3 darstellen.

3. Zusammensetzung gemäß Anspruch 1, worin in den Verbindungen der Formeln I bis IV,
R¹ C₃-C₉-Alkyl,
R², wenn Q für -S- steht, einen Rest -R³-COO-R⁴,
R², wenn Q für -O-CO- steht, C₇-C₁₁-Alkyl oder einen Rest -CH=CH-COO-R⁵,
R³ Methylen oder Ethylen,
R⁴ C₈-C₁₂-Alkyl,
R⁵ C₁-C₁₈-Alkyl oder Cyclohexyl,
R⁶, wenn Q für -S- steht, Methylen oder Ethylen,
R⁶, wenn Q für -O-CO- steht, eine Gruppe -CH=CH-,
R⁷ -C₂H₄-
sowie i die Zahl 1 oder 2, j eine Zahl aus dem Bereich von 1 bis 6 und k eine Zahl aus dem Bereich von 1 bis 3 sind.

4. Zusammensetzung gemäß Anspruch 1, welche als Verbindung(en) der Komponente A) solche der Formel I und/oder III enthalten, worin R¹ Butyl oder Octyl, R³ -CH₂-, R⁷ -C₂H₄- und im Fall Q = S, R² für -CH₂-COO-R⁴ steht, R⁴ C₈-C₁₂-Alkyl ist, sowie im Fall Q = O-CO, R² für -CH=CH-COO-R⁵ und R⁵ für C₁-C₁₈-Alkyl stehen.

5. Zusammensetzung gemäß Anspruch 1, enthaltend als Komponente B) mindestens einen der Stoffe CaO und Ca(OH)₂.

6. Zusammensetzung gemäß Anspruch 1, wobei die Komponente A) im CPVC zu 0,5 bis 5 Gew.% (bezogen auf CPVC) enthalten ist, und die Komponente B) im CPVC zu 0,1 bis 4 Gew.% (bezogen auf CPVC) enthalten ist.

7. Zusammensetzung gemäß Anspruch 1, wobei Komponente A) im CPVC zu 1,5 bis 2,5 Gew.% (bezogen auf CPVC) enthalten ist, und die Komponente B) im CPVC zu 0,5 bis 1,5 Gew.% (bezogen auf CPVC) enthalten ist.

8. Verwendung der Stabilisatorkombination A) und B) gemäss Anspruch **1** zum Stabilisieren von CPVC.

9. Verfahren zur Stabilisierung von CPVC durch Zugabe der Stabilisatorkombination A) und B) gemäss Anspruch **1**.

## Claims

1. A composition comprising chlorinated PVC (CPVC) and as stabilizer combination
A) at least one organotin compound of one of the formulae I to VII
[R¹]ᵢSn[-Q-R²]₄₋ᵢ (I) 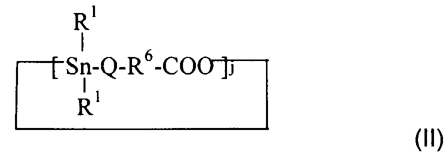 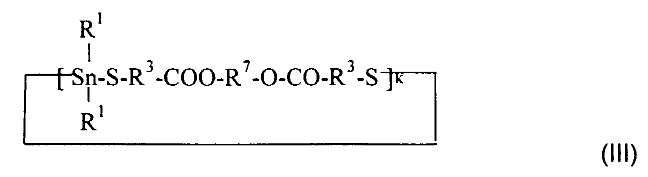 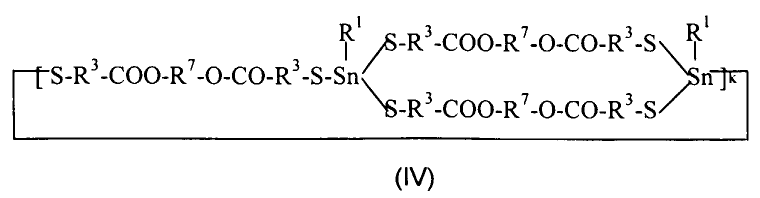 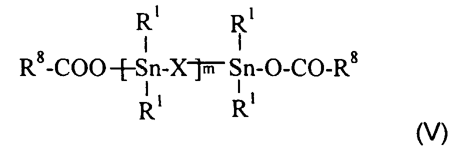
RₚSnS_{q} (VI) or [RₚSnS_{q}]ᵣ (VII)
in which
R and R¹ independently of one another are C₁-C₁₂alkyl or C₃-C₁₁alkoxycarbonylethyl,
Q is -S- or -O-CO-, and
R², if Q is -S-, is C₈-C₁₈alkyl or a radical -R³-COO-R⁴ or -R³-O-CO-R⁴, and
R², if Q is -O-CO-, is C₁-C₁₈alkyl, C₂-C₁₈alkenyl, phenyl, C₁-C₄alkyl-substituted phenyl, or a radical -CH=CH-COO-R⁵,
R³ is methylene, ethylene or o-phenylene,
R⁴ is C₅-C₁₈alkyl,
R⁵ is C₁-C₁₈alkyl, C₅-C₇cycloalkyl or benzyl,
R⁶, if Q is -S-, is methylene, ethylene or o-phenylene, and
R⁶, if Q is -O-CO-, is C₁-C₈alkylene, o-phenylene or a group -CH=CH-,
R⁷ is C₂-C₄alkylene or is C₄-C₈alkylene interrupted by -O-,
R⁸ is C₁-C₁₈alkyl, C₂-C₁₈alkenyl, phenyl, C₁-C₄alkyl-substituted phenyl, or a radical -CH=CH-COO-R⁵,
X independently at each occurrence is -O- or -O-CO-R⁹-COO-,
R⁹ is C₁-C₈alkylene, o-phenylene or a group -CH=CH-,
p is 1 or 2, q is (4-p)/2, and r > 1,
i is 1 or 2, j is a number from 1 to 6, k is a number from 1 to 3 and m is a number from 1 to 4, and
B) at least one compound selected from NaOH, KOH, Ca(OH)₂ and CaO.

2. A composition according to claim 1, wherein in the compounds of the formulae I to IV
R¹ is C₁-C₁₂alkyl,
R², if Q is -S-, is C₈-C₁₈alkyl or a radical -R³-COO-R⁴, and
R², if Q is -O-CO-, is C₇-C₁₈alkyl, C₈-C₁₈alkenyl, phenyl, or a radical -CH=CH-COO-R⁵,
R³ is methylene, ethylene or o-phenylene,
R⁴ is C₅-C₁₈alkyl,
R⁵ is C₁-C₁₈alkyl or C₅-C₇cycloalkyl,
R⁶ , if Q is -S-, is methylene, ethylene or o-phenylene, and
R⁶ , if Q is -O-CO-, is C₁-C₄alkylene, o-phenylene or a group -CH=CH-,
R⁷ is C₂-C₄alkylene or is C₄-C₈alkylene interrupted by -O-,
and i is 1 or 2, j is a number from 1 to 6 and k is a number from 1 to 3.

3. A composition according to claim 1, wherein in the compounds of the formulae I to IV
R¹ is C₃-C₉alkyl,
R², if Q is -S-, is a radical -R³-COO-R⁴, and
R², if Q is -O-CO-, is C₇-C₁₁alkyl, or a radical -CH=CH-COO-R⁵,
R³ is methylene or ethylene,
R⁴ is C₈-C₁₂alkyl,
R⁵ is C₁-C₁₈alkyl or cyclohexyl,
R⁶ , if Q is -S-, is methylene or ethylene, and
R⁶ , if Q is -O-CO-, is a group -CH=CH-,
R⁷ is -C₂-H₄-
and i is 1 or 2, j is a number from 1 to 6 and k is a number from 1 to 3.

4. A composition according to claim 1, which comprises, as compound(s) of component A), those of the formulae I and/or III in which
R¹ is butyl or octyl, R³ is -CH₂-, R⁷ is -C₂H₄- and R², if Q is S, is -CH₂-COO-R⁴, where R⁴ is
C₈-C₁₂alkyl, and R², if Q is O-CO, is -CH=CH-COO-R⁵, where R⁵ is C₁-C₁₈alkyl.

5. A composition according to claim 1, comprising as component B) at least one of the substances CaO and Ca(OH)₂.

6. A composition according to claim 1, where the proportion of component A) in the CPVC is from 0.5 to 5% by weight (based on CPVC) and the proportion of component B) in the CPVC is from 0.1 to 4% by weight (based on CPVC).

7. A composition according to claim 1, where the proportion of component A) in the CPVC is from 1.5 to 2.5% by weight (based on CPVC) and the proportion of component B) in the CPVC is from 0.5 to 1.5% by weight (based on CPVC).

8. The use of a stabilizer combination A) and B) according to claim **1** for stabilizing CPVC.

9. A method of stabilizing CPVC by adding a stabilizer combination A) and B) according to claim **1**.

## Revendications

1. Composition contenant du PVC chloré (CPVC) et, en tant que combinaison stabilisatrice :
A) au moins un composé d'organoétain d'une des formules I à VII
[R¹]ᵢSn[-Q-R²]₄₋ᵢ (I) 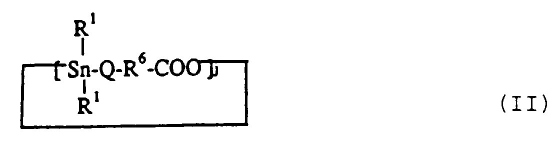 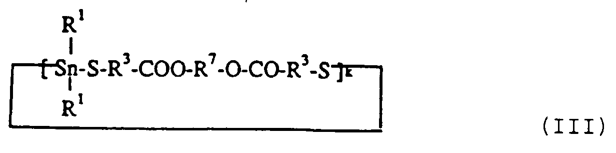 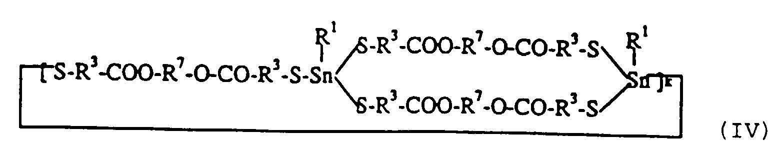 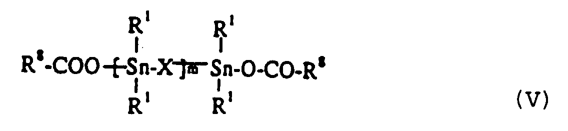
RₚSnS_{q} (VI) ou [RₚSnS_{q}]ᵣ (VII)
dans lesquelles
R et R¹ signifient indépendamment l'un de l'autre un alkyle en C₁-C₁₂ ou un alkoxycarbonyléthyle en C₃-C₁₁;
Q signifie -S- ou -O-CO-;
R², lorsque Q signifie -S-, est un alkyle en C₈-C₁₈ ou un radical -R³-COO-R⁴ ou -R³-O-CO-R⁴;
R², lorsque Q signifie -O-CO-, est un alkyle en C₁-C₁₈, un alcényle en C₂-C₁₈, un phényle, un phényle substitué par un alkyle en C₁-C₄, ou un radical -CH=CH-COO-R⁵;
R³ signifie un méthylène, un éthylène ou un o-phénylène;
R⁴ signifie un alkyle en C₅-C₁₈;
R⁵ signifie un alkyle en C₁-C₁₈, un cycloalkyle en C₅-C₇ ou un benzyle;
R⁶, lorsque Q signifie -S-, signifie un méthylène, un éthylène ou un o-phénylène;
R⁶, lorsque Q signifie -O-CO-, signifie un alkylène en C₁-C₈, un o-phénylène, ou un groupement -CH=CH-;
R⁷ représente un alkylène en C₂-C₄ ou un alkylène en C₄-C₈ interrompu par -O-;
R⁸ est un alkyle en C₁-C₁₈, un alcényle en C₂-C₁₈, un phényle, un phényle substitué par un alkyle en C₁-C₄, ou un radical -CH=CH-COO-R⁵;
X signifie indépendamment l'un de l'autre -O- ou -O-CO-R⁹-COO-;
R⁹ signifie un alkylène en C₁-C₈, un o-phénylène ou un groupement -CH=CH-;
p est 1 ou 2, q est (4-p)/2, et r > 1;
i représente le nombre 1 ou 2, j représente un nombre dans l'intervalle de 1 à 6, k représente un nombre dans l'intervalle de 1 à 3 et m représente un nombre dans l'intervalle de 1 à 4, ainsi que
B) au moins un composé choisi parmi NaOH, KOH, Ca(OH)₂ et CaO.

2. Composition suivant la revendication 1, dans laquelle, dans les composés de formules I à IV,
R¹ signifie un alkyle en C₁-C₁₂;
R², lorsque Q signifie -S-, est un alkyle en C₈-C₁₈ ou un radical -R³-COO-R⁴;
R², lorsque Q signifie -O-CO-, est un alkyle en C₇-C₁₈, un alcényle en C₈-C₁₈, un phényle, ou un radical -CH=CH-COO-R⁵;
R³ signifie un méthylène, un éthylène ou un o-phénylène;
R⁴ signifie un alkyle en C₅-C₁₈;
R⁵ signifie un alkyle en C₁-C₁₈ ou un cycloalkyle en C₅-C₇;
R⁶, lorsque Q signifie -S-, signifie un méthylène, un éthylène ou un o-phénylène;
R⁶, lorsque Q signifie -O-CO-, est un alkylène en C₁-C₄, un o-phénylène, ou un groupement -CH=CH-;
R⁷ représente un alkylène en C₂-C₄ ou un alkylène en C₄-C₈ interrompu par -O-;
i représente le nombre 1 ou 2, j représente un nombre dans l'intervalle de 1 à 6 et k représente un nombre dans l'intervalle de 1 à 3.

3. Composition suivant la revendication 1, dans laquelle, dans les composés de formules I à IV,
R¹ signifie un alkyle en C₃-C₉;
R², lorsque Q signifie -S-, est un radical -R³-COO-R⁴;
R², lorsque Q signifie -O-CO-, est un alkyle en C₇-C₁₁ ou un radical -CH=CH-COO-R⁵;
R³ signifie un méthylène ou un éthylène;
R⁴ signifie un alkyle en C₈-C₁₂;
R⁵ signifie un alkyle en C₁-C₁₈ ou un cyclohexyle;
R⁶, lorsque Q signifie -S-, est un méthylène ou un éthylène;
R⁶, lorsque Q signifie -O-CO-, est un groupement -CH=CH-;
R⁷ est -C₂H₄-;
de même que i est le nombre 1 ou 2, j est un nombre dans l'intervalle de 1 à 6 et k est un nombre dans l'intervalle de 1 à 3.

4. Composition suivant la revendication 1, qui contient en tant que composé(s) du composant A) ceux de formule I et/ou III, dans lesquelles R¹ signifie un butyle ou un octyle, R³ signifie -CH₂-, R⁷ signifie -C₂H₄- et, si Q = S, R² signifie -CH₂-COO-R⁴, R⁴ est un alkyle en C₈-C₁₂, de même que si Q = O-CO, R² signifie -CH=CH-COO-R⁵ et R⁵ signifie un alkyle en C₁-C₁₈.

5. Composition suivant la revendication 1, contenant en tant que composant B) au moins une des substances CaO et Ca(OH)₂.

6. Composition suivant la revendication 1, dans laquelle le composant A) est contenu dans le CPVC à raison de 0,5 à 5% en poids (sur base du CPVC), et le composant B) est contenu dans le CPVC à raison de 0,1 à 4% en poids (sur base du CPVC).

7. Composition suivant la revendication 1, dans laquelle le composant A) est contenu dans le CPVC à raison de 1,5 à 2,5% en poids (sur base du CPVC), et le composant B) est contenu dans le CPVC à raison de 0,5 à 1,5% en poids (sur base du CPVC).

8. Utilisation de la combinaison stabilisatrice A) et B) suivant la revendication 1 pour la stabilisation de CPVC.

9. Procédé pour la stabilisation de CPVC par addition de la combinaison stabilisatrice A) et B) suivant la revendication 1.
